# EUROPÄISCHE PATENTSCHRIFT

(11) **EP 1 752 241 B1**
(45) Veröffentlichungstag und Bekanntmachung des Hinweises auf die Patenterteilung: **02.07.2014**
(21) Anmeldenummer: 06016089.2
(22) Anmeldetag: 02.08.2006
(51) Int. Cl.: B23B 3/06, B23Q 7/04

(54) **Drehmaschine**
Turning machine
Tour d'usinage

(30) Priorität: 10.08.2005 DE 102005039089
(43) Veröffentlichungstag der Anmeldung: 14.02.2007
(73) Patentinhaber: Index-Werke GmbH & Co. KG Hahn & Tessky, 73730 Esslingen (DE)
(72) Erfinder: Grossmann, Walter, 73666 Baltmannsweiler (DE)
(74) Vertreter: Hoeger, Stellrecht & Partner Patentanwälte

(56) Entgegenhaltungen:
- DE-A1- 3 530 982
- DE-A1- 19 515 044
- "Massgeschneidert aus dem baukasten" [Online] Oktober 2004 (2004-10), INDEX-WERKE TRAUB , XP002566093 Gefunden im Internet: URL:http://www.index-werke.de/mediadata/g2 00-0223d.pdf> [gefunden am 2010-01-29] * Absatz [0001] - Absatz [0005] *
- "TRAUB Dreh-Fräszentrum TNC 65 mit Steuerung TX 8i" [Online] Juni 2004 (2004-06), INDEX-WERKE TRAUB , XP002566081 Gefunden im Internet: URL:http://www.index-werke.de/mediadata/tn c-0057d.pdf> [gefunden am 2010-01-29] * das ganze Dokument *

## Beschreibung

Die Erfindung betrifft eine Drehmaschine gemäß dem Oberbegriff des Anspruchs 1.

Eine derartige Drehmaschine ist beispielsweise aus der DE 103 08 342 A1 bekannt.

Bei einer derartigen Drehmaschine besteht das Problem, dass die Anordnung und die Beschickung der Bearbeitungsstation relativ zur Drehbearbeitungsstation ungünstig ist.

Der Erfindung liegt daher die Aufgabe zugrunde, eine Drehmaschine der gattungsgemäßen Art derart zu verbessern, dass insgesamt die Bearbeitung des Werkstücks in der Bearbeitungsstation und der Drehbearbeitungsstation optimiert werden kann.

Diese Aufgabe wird bei einer Drehmaschine gemäß dem Anspruch 1 gelöst.

Diese Lösung hat den Vorteil, dass in einfacher Weise das Werkstück stabil aufgenommen werden kann und auch stabil und somit präzise relativ zu der Bearbeitungsstation und der Drehbearbeitungsstation ausgerichtet werden kann.

Dies gilt insbesondere dann, wenn die Werkstücke langgestreckte Teile, das heißt beispielsweise sogenannte Wellenteile, sind, die durch eine einzige Werkstückhalteeinrichtung nicht präzise genug positioniert werden können.

Der Vorteil der erfindungsgemäßen Lösung ist insbesondere auch dann darin zu sehen, dass damit die Präzision der Ausrichtung des Werkstücks erheblich gegenüber den bekannten Lösungen gesteigert werden kann, und somit auch die Präzision der Bearbeitung des Werkstücks in der Bearbeitungsstation mit den rotierenden Werkzeugen.

Weitere Merkmale und Vorteile der Erfindung sind Gegenstand der abhängigen Ansprüche.

Besonders günstig ist es, wenn mit beiden Werkstückhalteeinrichtungen das Werkstück gleichzeitig greifbar und durch synchrone Bewegungen der Werkstückhalteeinrichtungen und das Werkstück in der Bearbeitungsstation positionierbar ist.

Ferner ist es günstig, wenn das Werkstück durch synchrone Bewegungen der Werkstückhalteeinrichtungen in die Drehbearbeitungsstation einsetzbar ist.

Hinsichtlich der Ausbildung der Trägerschlitten zur Aufnahme der Werkstückhalteeinrichtungen wurden bislang keine spezifischen Angaben gemacht.

Besonders günstig ist es dabei, wenn auf jedem Trägerschlitten ein Trägerkopf angeordnet ist, welcher die jeweilige Werkstückhalteeinrichtung trägt.

Vorzugsweise ist dabei der jeweilige Trägerkopf in gleicher Weise wie bereits im Zusammenhang mit den eingangs beschriebenen Ausführungsbeispielen dargelegt, relativ zum jeweiligen Trägerschütten in Richtung einer weiteren Querrichtung zur Spindelachse bewegbar.

Dabei kann der Trägerkopf linear verschiebbar sein. Besonders günstig ist es, wenn der jeweilige Trägerkopf um eine Schwenkachse schwenkbar ist.

Um das Werkstück in geeigneter Weise positionieren zu können, ist vorzugsweise vorgesehen, dass die Trägerköpfe zum Positionieren des Werkzeugträgers synchron relativ zum jeweiligen Trägerschlittens bewegbar sind.

Ferner ist es günstig, wenn die Trägerschlitten ihrerseits zum Positionieren und/oder Bearbeiten des Werkstücks W synchron relativ zum Maschinengestell bewegbar sind.

Vorteilhaft weist der mindestens eine Trägerschlitten einen relativ zu diesem bewegbaren Trägerkopf auf, an welchem die Werkstückhalteeinrichtung angeordnet ist und mit welchem die Werkstückhalteeinrichtung in einer weiteren, quer zur Z-Achse verlaufenden Querrichtung relativ zum Trägerschlitten bewegbar ist, dass ein in der Werkstückhalteeinrichtung aufgenommenes Werkstück durch Bewegungen in der Querrichtung relativ zum Trägerschlitten in der Bearbeitungsstation positionierbar und in die Drehbearbeitungsstation einsetzbar und/oder aus dieser entnehmbar ist.

Der Vorteil dieser Lösung ist darin zu sehen, dass durch den bewegbaren Trägerkopf die Möglichkeit einer weiteren Bewegung des Werkstücks geschaffen wurde, die es ermöglicht, einerseits die Bearbeitungsstation zweckmäßig relativ zur Drehbearbeitungsstation anzuordnen und andererseits das Werkstück vorteilhaft in dieser Bearbeitungsstation zu positionieren und dann in die Drehbearbeitungsstation zu transferieren.

Besonders günstig ist es, wenn die Werkstückhalteeinrichtung durch Bewegen in der weiteren Querrichtung aus einer parallel zur X-Richtung und durch die Spindelachse hindurch verlaufenden Drehbearbeitungsebene herausbewegbar ist, so dass die Bearbeitung des Werkstücks in der Bearbeitungsstation im Abstand von der Drehbearbeitungsebene erfolgt und somit der Spänefall bei Bearbeitung des Werkstücks in der Bearbeitungsstation die Bearbeitung des Werkstücks in der Drehbearbeitungsstation nicht beeinträchtigt.

Hinsichtlich der Realisierung der Bewegbarkeit der Werkstückhalteeinrichtung in der weiteren Querrichtung sind die unterschiedlichsten Lösungen denkbar. Beispielsweise könnte eine lineare Bewegung des Trägerkopfes vorgesehen sein.

Eine besonders günstige Lösung sieht jedoch vor, dass der Trägerkopf um eine zur Spindelachse parallele Schwenkachse schwenkbar ist, da eine derartige Schwenkbewegung in einfacher Weise eine hohe Stabilität und somit Präzision bei der Positionierung des Werkstücks erlaubt und andererseits einfach realisierbar ist.

Ein derartiger Trägerkopf schafft insbesondere die Möglichkeit, an diesem neben der Halteeinrichtung noch Bearbeitungswerkzeuge zur Bearbeitung des in der Drehbearbeitungsstation aufgenommenen Werkstücks anzuordnen und somit diese Werkzeuge zur Bearbeitung des Werkstücks in der Drehbearbeitungsstation einsetzen zu können, und zwar zu den Zeiten, zu denen keine Positionierung eines Werkstücks relativ zur Bearbeitungsstation oder relativ zur Drehbearbeitungsstation erforderlich ist.

Eine besonders einfache Realisierungsform eines derartigen Trägerkopfes sieht vor, dass dieser als Revolverkopf ausgebildet ist.

Um in einfacher Weise das Werkstück in der Bearbeitungsstation bearbeiten zu können, ist vorgesehen, dass das Werkstück zum Bearbeiten in der Bearbeitungsstation in einer Bearbeitungsebene bewegbar ist, die parallel zur Drehbearbeitungsebene verläuft.

Eine derartige Lösung erlaubt es insbesondere, das Werkstück in der Bearbeitungsebene relativ einfach zu positionieren, nämlich durch dieselben Bewegungen des Trägerschlittens, die auch zur Positionierung des Werkstücks in der Drehbearbeitungsebene vorgesehen sind, solange der Transfer des Werkstücks zwischen der Bearbeitungsebene und der Drehbearbeitungsebene aufgrund der Bewegbarkeit des Trägerkopfes relativ zu dem Trägerschlitten realisiert werden kann.

Besonders günstig lässt sich die Handhabung eines Werkstücks in der erfindungsgemäßen Drehmaschine dann realisieren, wenn das Werkstück derart um die Schwenkachse schwenkbar ist, dass dieses von einer der Spindelachse zugewandten Seite der Schwenkachse auf eine der Spindelachse abgewandte Seite der Schwenkachse verschwenkbar ist.

Damit lässt sich beispielsweise das Werkstück auf der der Spindelachse abgewandten Seite der Schwenkachse aufnehmen und nach Positionieren desselben in der Bearbeitungsstation in die Drehbearbeitungsstation transferieren, in welcher das Werkstück dann auf einer der Spindelachse zugewandten Seite der Schwenkachse steht.

Hinsichtlich der Bearbeitung des Werkstücks in der Bearbeitungsstation wurden bislang keine näheren Angaben gemacht. So ist es besonders günstig, wenn das Werkstück mindestens durch Bewegen des Trägerschlittens relativ zu dem mindestens einen rotierenden Werkzeug in der Bearbeitungsstation auf mindestens einer Seite bearbeitbar ist.

Eine derartige Bearbeitung lässt sich besonders einfach geometrisch dann ausführen, wenn das mindestens eine rotierende Werkzeug eine zur Spindelachse parallele Rotationsachse aufweist.

Zur Aufnahme der Werkzeuge ist vorzugsweise vorgesehen, dass die Bearbeitungsstation mindestens eine in Richtung quer zur Spindelachse, das heißt in X-Richtung, stationär, das heißt unbeweglich, relativ zum Maschinengestell angeordnete erste Werkzeugaufnahme aufweist.

Das heißt, dass die erste Werkzeugaufnahme nicht quer zur Spindelachse bewegbar ist, sondern maximal parallel zur Spindelachse.

Eine weitere günstige Ausführungsform sieht jedoch vor, dass die Bearbeitungsstation mindestens eine in Richtung parallel zur Spindelachse stationär, das heißt unbeweglich, relativ zum Maschinengestell angeordnete erste Werkzeugaufnahme aufweist, so dass in diesem Fall die Werkzeugaufnahme keine Bewegbarkeit in Richtung parallel zur Spindelachse, das heißt in Z-Richtung, aufweist.

Um die Werkstücke in der Bearbeitungsstation optimal bearbeiten zu können, sieht eine besonders günstige Lösung in der Bearbeitungsstation mehrere rotierende Werkzeuge vor.

Bei mehreren rotierenden Werkzeugen sind deren Rotationsachse beispielsweise parallel zueinander ausgerichtet.

Um das Werkstück, insbesondere Wellenteile, beidseitig, das heißt im Bereich ihrer beiden Enden, bearbeiten zu können, sind in der Bearbeitungsstation vorzugsweise einander gegenüberliegende rotierende Werkzeuge vorgesehen, mit denen in einer Richtung parallel zur Spindelachse einander gegenüberliegende erste und zweite Seiten des Werkstücks bearbeitbar sind.

Eine derartige Lösung ist insbesondere für Wellenteile von großem Vorteil, da sich diese dann im Bereich beider Enden so bearbeiten lassen, dass eine präzise Aufnahme derselben in der Drehbearbeitungsstation möglich ist.

Zweckmäßigerweise ist die Bearbeitungsstation in diesem Fall so ausgebildet, dass diese in Richtung parallel zur Spindelachse einander gegenüberliegende erste und zweite Werkzeugaufnahmen aufweist, in denen die rotierend angetriebenen Werkzeuge angeordnet sind.

Diese Aufnahmen können beispielsweise so ausgebildet sein, dass sie einen gemeinsamen Antrieb für die in diesen vorgesehenen rotierenden Werkzeuge aufweisen.

Eine Lösung sieht jedoch vor, dass die ersten und zweiten Werkzeugaufnahmen eigene Werkzeugantriebe aufweisen. Eine derartige Lösung hat den großen Vorteil, dass damit die einander gegenüberliegend angeordneten Werkzeuge einzeln angetrieben werden können, das heißt beispielsweise nur dann angetrieben werden, wenn diese auch zur Bearbeitung in Einsatz kommen.

Zweckmäßigerweise sind auch in diesem Fall die ersten und zweiten Werkzeugaufnahmen in Richtung quer zur Spindelachse stationär relativ zum Maschinengestell angeordnet.

Ferner sieht ein weiteres vorteilhaftes Ausführungsbeispiel vor, dass die ersten und zweiten Werkzeugaufnahmen in Richtung parallel zur Spindelachse stationär, das heißt unbeweglich, relativ zum Maschinengestell angeordnet sind, dabei jedoch einen Abstand aufweisen, der größer als die Länge des Werkstücks ist.

Dabei ist es besonders zweckmäßig, wenn die ersten und zweiten Werkzeugaufnahmen insbesondere stationär relativ zum Maschinengestell angeordnet sind, so dass die zur Bearbeitung erforderliche Relativbewegung zwischen den rotierenden Werkzeugen und dem Werkstück lediglich durch Bewegen der Werkstückhalteeinrichtungen relativ zu den rotierend angetriebenen Werkzeugen erfolgt.

Eine hinsichtlich der Durchführung der endseitigen Bearbeitung der Werkstücke besonders günstige Lösung sieht vor, dass in der Bearbeitungsstation die einander gegenüberliegenden Seiten des Werkstücks aufeinanderfolgend bearbeitbar sind, das heißt, dass zunächst die Bearbeitung einer Seite des Werkstücks erfolgt und nachfolgend die Bearbeitung der anderen Seite, insbesondere primär durch Bewegen des Werkstücks relativ zu den rotierend angetriebenen Werkzeugen.

Besonders günstig ist es dabei, wenn die Bearbeitungsstation als Vorbearbeitungsstation für ein rohes Werkstück vorgesehen ist.

Ferner ist zweckmäßigerweise in diesem Fall dann vorgesehen, dass das in der Vorbearbeitungsstation vorbearbeitete rohe Werkstück in die Drehbearbeitungsstation einsetzbar ist.

Ferner ist insbesondere im Fall von Wellenteilen vorgesehen, dass in der Drehbearbeitungsstation das Werkstück einerseits mittels der Arbeitsspindel und andererseits mittels eines Reitstocks aufnehmbar ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf ein erstes Ausführungsbeispiel einer erfindungsgemäßen Werkzeugmaschine in Richtung des Pfeils A in Fig. 2 bei Abholung eines Werkstücks auf einer einer Spindelachse abgewandten Seite von das Werkstück haltenden Trägerköpfen;
- Fig. 2: einen Schnitt längs Linie 2-2 in Fig. 1;
- Fig. 3: einen Schnitt längs Linie 3-3 in Fig. 1;
- Fig. 4: eine Draufsicht ähnlich Fig. 1 beim Positionieren des Werkstücks in einer Bearbeitungsebene;
- Fig. 5: einen Schnitt entsprechend Fig. 2 beim Positionieren des Werkstücks in der Bearbeitungsebene;
- Fig. 6: eine Draufsicht entsprechend Fig. 1 beim Positionieren des Werkstücks in der Bearbeitungsstation;
- Fig. 7: einen Schnitt ähnlich Fig. 2 beim Positionieren des Werkstücks in der Bearbeitungsstation;
- Fig. 8: eine Draufsicht ähnlich Fig. 1 beim Positionieren des Werkstücks in der Drehbearbeitungsstation;
- Fig. 9: einen Schnitt ähnlich Fig. 2 beim Positionieren des Werkstücks in der Drehbearbeitungsstation;
- Fig. 10: eine Draufsicht ähnlich Fig. 1 eines zweiten Ausführungsbeispiels einer erfindungsgemäßen Drehmaschine;
- Fig. 11: einen Schnitt längs Linie 11-11 in Fig. 10;
- Fig. 12: eine Ansicht ähnlich Fig. 1 eines dritten Ausführungsbeispiels einer erfindungsgemäßen Drehmaschine;
- Fig. 13: einen Schnitt ähnlich Fig. 11 des dritten Ausführungsbeispiels;
- Fig. 14: eine perspektivische Darstellung in einer Ansicht ähnlich Fig. 1 eines vierten Ausführungsbeispiels beim Bearbeiten des Werkstücks auf einer Seite;
- Fig. 15: eine Darstellung entsprechend Fig. 14 beim Bearbeiten des Werkstücks auf einer anderen Seite;
- Fig. 16: eine ausschnittsweise Darstellung eines fünften Ausführungsbeispiels einer erfindungsgemäßen Drehmaschine vor Einsetzen eines rohen Werkstücks in die Werkstückhalteeinrichtung;
- Fig. 17: eine Darstellung ähnlich Fig. 16 beim Einsetzen des Werkstücks in die Werkstückhalteeinrichtung;
- Fig. 18: eine Darstellung ähnlich Fig. 16 beim Bearbeiten des Werkstücks in der Bearbeitungsstation und Entnehmen eines Werkstücks aus der Drehbearbeitungsstation und
- Fig. 19: eine Darstellung ähnlich Fig. 16 beim Einsetzen eines in der Bearbeitungsstation vorbearbeiteten Werkstücks in die Drehbearbeitungsstation und Entfernen eines in der Drehbearbeitungsstation fertig bearbeiteten Werkstücks.

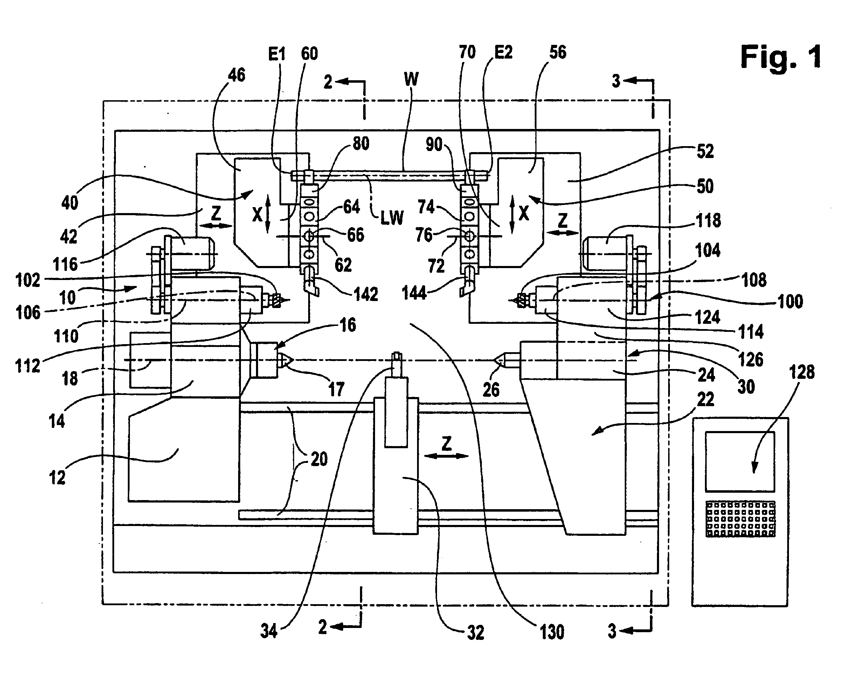

Ein erstes Ausführungsbeispiel einer erfindungsgemäßen Drehmaschine, dargestellt in Fig. 1 bis 9, umfasst ein als Ganzes mit 10 bezeichnetes Maschinengestell, an welchem ein Spindelträger 12 angeordnet ist, welcher ein Spindelgehäuse 14 trägt, in welchem eine Arbeitsspindel 16 um eine Spindelachse 18 drehbar angeordnet ist, wobei die Arbeitsspindel 16 beispielsweise mit einem Stirnmitnehmer 17 versehen ist.

Ferner sind an dem Maschinengestell 10 parallel zueinander verlaufende Führungen 20 vorgesehen, welche sich in einer parallel zur Spindelachse 18 verlaufenden Z-Richtung erstrecken und an welchen ein Reitstockträger 22 in der Z-Richtung relativ zum Maschinengestell 10 verschiebbar geführt ist, wobei an dem Reitstockträger 22 ein Reitstockgehäuse 24 gelagert ist, in welchem eine Reitstockspitze 26 koaxial zur Spindelachse 18 ausgerichtet und drehbar gelagert ist.

Die Arbeitsspindel 16 mit dem Stirnmitnehmer 17 und die Reitstockspitze 26 bilden ihrerseits eine Werkstückaufnahme einer als Ganzes mit 30 bezeichneten Drehbearbeitungsstation für ein vorzugsweise als Wellenteil ausgebildetes Werkstück W.

Zur drehbaren Abstützung des Werkstücks W in der Drehbearbeitungsstation ist auf den Führungen 20 noch ein Lünettenschlitten 32 angeordnet, welcher ebenfalls in der Z-Richtung und somit parallel zur Spindelachse 18 verfahrbar ist und eine Lünette 34 zur Abstützung des Werkstücks W zwischen der Arbeitsspindel 16 und der Reitstockspitze 26 trägt.

Auf einer den Führungen 20 gegenüberliegenden Seite der Spindelachse 18 sind am Maschinengestell 10 zwei Kreuzschlitten 40 und 50 vorgesehen, welche jeweils einen Z-Schlitten 42, 52 aufweisen, der an Z-Führungen 44 parallel zur Spindelachse 18 am Maschinengestell 10 bewegbar geführt ist und einen X-Schlitten 46 bzw. 56, welcher relativ zum Z-Schlitten in einer X-Richtung quer zur Spindelachse 18 verschiebbar geführt ist.

Jeder der Kreuzschlitten 40, 50 trägt ein Revolvergehäuse 60 bzw. 70, an dem jeweils um eine Revolverachse 62 bzw. 72 drehbar ein Revolverkopf 64, 74 angeordnet ist, der eine Vielzahl von Werkzeugaufnahmen 66 bzw. 76 aufweist. In jeweils einer dieser Werkzeugaufnahmen 66 bzw. 76 ist eine Werkstückhalteeinrichtung 80 bzw. 90 vorgesehen, welche in der Lage ist, mit zwei Haltefingern 82, 84 bzw. 92, 94 ein Werkstück W zu greifen und zwar an zwei in Längsrichtung LW des Werkstücks W im Abstand voneinander angeordneten Stellen, vorzugsweise nahe von Enden E1 bzw. E2 des Werkstücks W.

Auf der Seite der Spindelachse 18, auf welcher die Kreuzschlitten 40, 50 angeordnet sind, ist eine als Ganzes mit 100 bezeichnete Bearbeitungsstation vorgesehen, in welcher beispielsweise einander gegenüberliegende rotierende Werkzeuge 102, 104 angeordnet sind, wobei das rotierende Werkzeug 102 ein erstes rotierendes Werkzeug ist und das rotierende Werkzeug 104 ein zweites rotierendes Werkzeug.

Sowohl das erste rotierende Werkzeug 102 als auch das zweite rotierende Werkzeug 104 sind mit ihren Rotationsachsen 106 bzw. 108 koaxial zu einer als Ganzes mit 110 bezeichneten Bearbeitungsachse angeordnet, die vorzugsweise parallel zu der Spindelachse 18 verläuft.

Jedes der rotierenden Werkzeuge 102, 104 ist in einer ersten Werkzeugaufnahme 112 bzw. einer zweiten Werkzeugaufnahme 114 gehalten und in dieser durch einen Werkzeugantrieb 116 bzw. 118 um die Rotationsachse 106 bzw. 108 rotierend antreibbar.

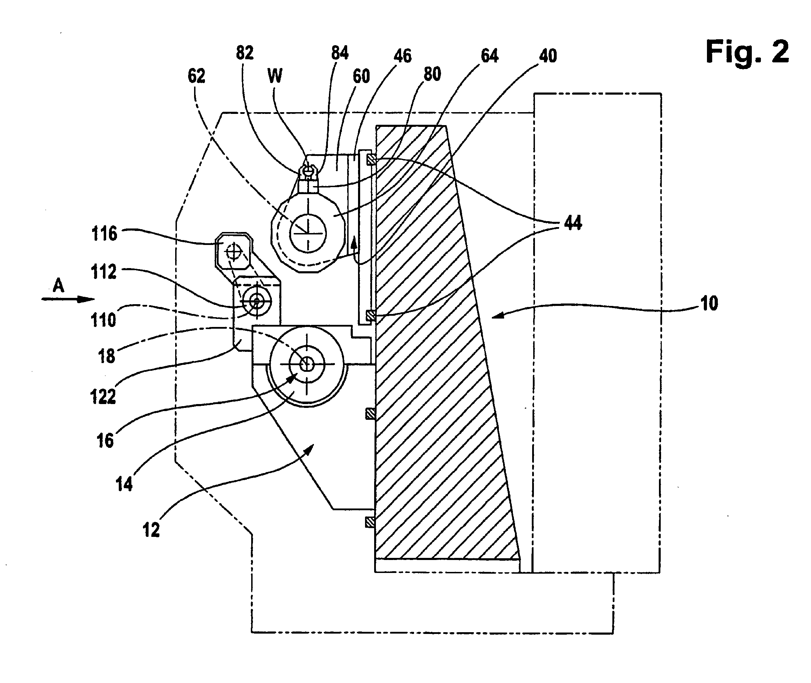

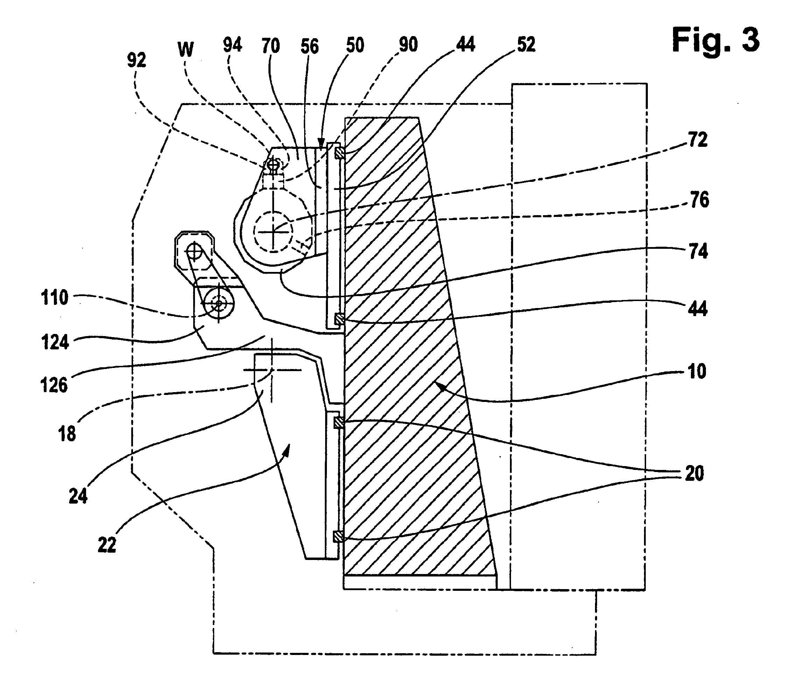

Ferner ist die erste Werkzeugaufnahme 112, wie beispielsweise in Fig. 2 dargestellt, mit ihrem Gehäuse 122 an dem Spindelträger 12 gehalten und somit stationär relativ zum Maschinengestell 10 angeordnet. Darüber hinaus ist die zweite Werkzeugaufnahme 114 mit ihrem Gehäuse 124, wie in Fig. 3 dargestellt, über einen Gehäuseträger 126 ebenfalls stationär am Maschinengestell 10 gehalten, wobei der Gehäuseträger 126 derart ausgebildet ist, dass der Reitstockträger 22 mit dem Reitstockgehäuse 24 kollisionsfrei relativ zum Gehäuseträger 126 in der Z-Richtung bewegbar sind. Bei dem in Fig. 1 bis 3 dargestellten Ausführungsbeispiel sind die rotierenden Werkzeuge 102, 104 als sogenannte Abläng- und Zentrierköpfe ausgebildet, welche in der Lage sind, das Werkstück W im Bereich der Enden E1 bzw. E2 abzulängen und gleichzeitig eine koaxial zur Längsachse LW verlaufende Zentrierbohrung einzubringen, so dass das Werkstück W nach Bearbeitung mit den Abläng- und Zentrierköpfen 102, 104 einerseits in Richtung der Längsachse LW eine definierte Länge aufweist und andererseits Zentrierbohrungen an den Enden E1, E2 aufweist, mit denen das Werkstück W zwischen einer an der Arbeitsspindel 16 vorgesehenen Spitze 17 und der Reitstockspitze 26 aufgenommen werden kann, um eine Drehbearbeitung am Werkstück W auszuführen.

Mittels einer Maschinensteuerung 128 sind die Kreuzschlitten 40 und 50 in der X- und Z-Richtung gesteuert bewegbar, die Revolverköpfe 64 bzw. 74 um ihre Revolverachsen 62 bzw. 72 gesteuert drehbar, wobei die Kreuzschlitten 40 und 50 und die Revolverköpfe 64 bzw. 74 einzeln und unabhängig voneinander bewegt werden können oder auch synchron miteinander.

Ferner ist der Reitstockträger 22 mittels der Maschinensteuerung 128 in Z-Richtung verschiebbar und die Lünette 34 ist ebenfalls mittels der Maschinensteuerung 128 zum Werkstück W einsetzbar. Außerdem ist die Arbeitsspindel 16 mittels der Maschinensteuerung 128 ansteuerbar.

Die Bearbeitung eines derartigen Werkstücks W in einer erfindungsgemäßen Drehmaschine erfolgt beispielsweise gemäß folgenden durch die Maschinensteuerung 128 gesteuerten Schritten.

Zunächst werden die Revolverköpfe 64 und 74 so um die Revolverachsen 62 bzw. 72 gedreht, dass die Werkstückhalteeinrichtungen 80, 90 auf einer der Spindelachse 18 abgewandten Seite der Revolverachsen 62, 72 stehen (Fig. 1), und somit die Werkstückhalteeinrichtungen 80, 90 auf einer einem Arbeitsraum 130 der Drehmaschine abgewandten Seite stehen, auf welcher eine Zufuhr eines rohen Werkstücks W über eine bekannte Zufuhreinrichtung erfolgt. Beispielsweise sieht die Zufuhreinrichtung einen zeichnerisch nicht dargestellten Werkstückgreifer für das als Wellenteil ausgebildete Werkstück W vor, welcher dieses zum Aufnehmen durch die Werkstückhalteeinrichtungen 80, 90 zur Verfügung stellt.

Zum Greifen des Werkstücks W werden dabei die Kreuzschlitten 40, 50 so bewegt, dass das Werkstück W im Bereich beider Enden E1, E2 zeitnah, möglichst gleichzeitig durch die Werkstückhalteeinrichtungen 80, 90 mit deren Haltefingern 82, 84 bzw. 92, 94 gegriffen und drehfest gehalten werden.

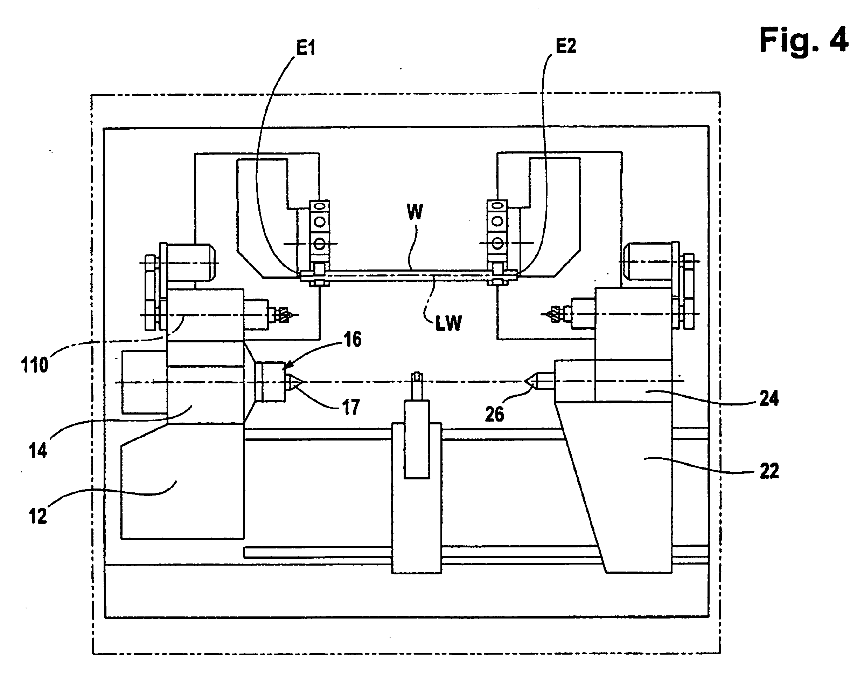

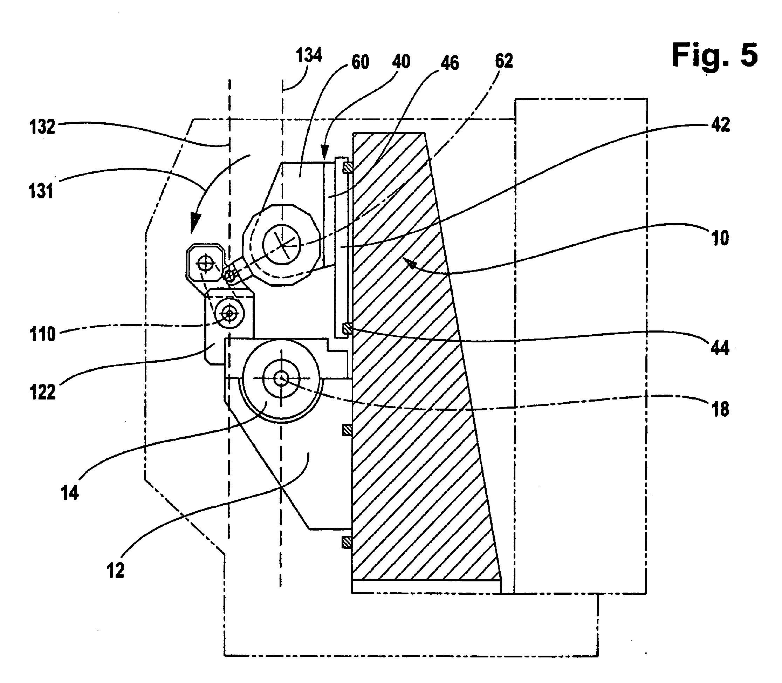

Um das Werkstück W nun in die Bearbeitungsstation 100 zu bewegen, erfolgt ein synchrones Verschwenken der Revolverköpfe 64, 74 in einer Schwenkrichtung 131 um deren Revolverachsen 62 bzw. 72, so dass das Werkstück W mit seiner Längsachse LW in einer Bearbeitungsebene 132 zu liegen kommt, die vorzugsweise parallel zu einer Drehbearbeitungsebene 134 liegt, jedoch vorzugsweise auf einer dem Maschinengestell 10 abgewandten Seite der Drehbearbeitungsebene 134 und somit in einem größeren Abstand von dem Maschinengestell 10 verläuft als die Drehbearbeitungsebene 134 (Fig. 4, 5).

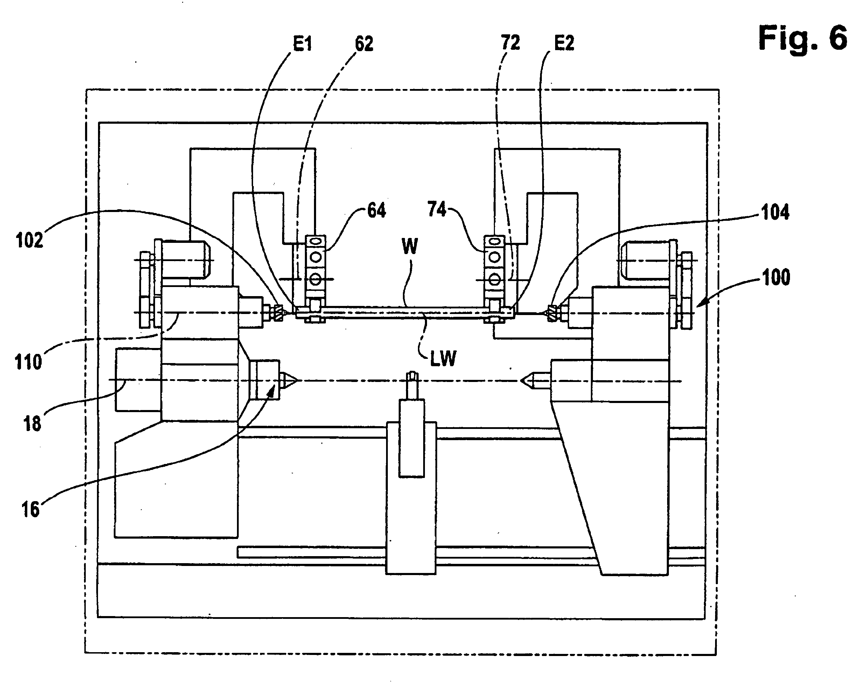

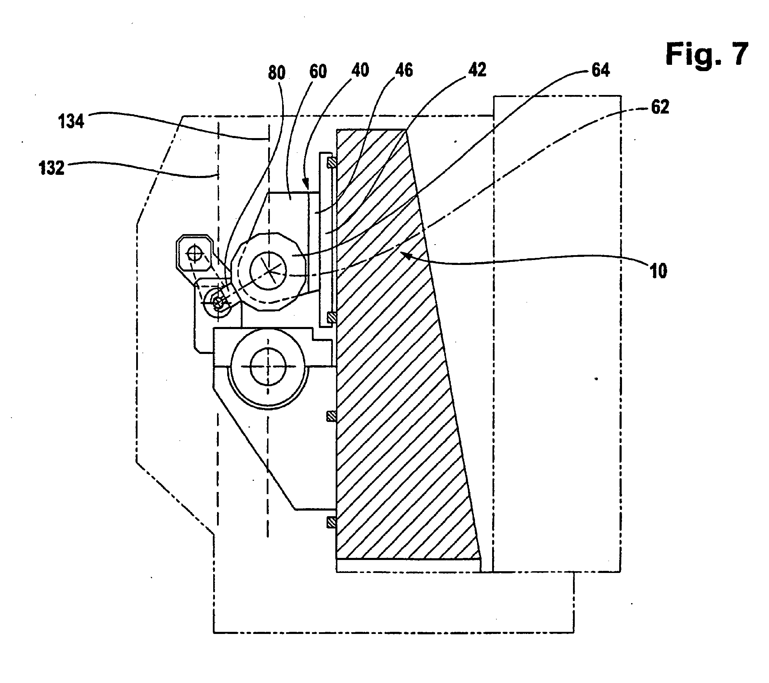

Nach Positionieren des Werkstücks W mit seiner Längsachse LW in der Bearbeitungsebene 132 erfolgt durch synchrones Verfahren der Kreuzschlitten 40, 50 in X-Richtung ein koaxiales Ausrichten der Längsachse LW des Werkstücks W zur Bearbeitungsachse 110, wie dies in Fig. 6 und 7 dargestellt ist.

Nach Ausrichten des Werkstücks W koaxial zur Bearbeitungsachse 110 in der Bearbeitungsstation 100 erfolgt eine Bearbeitung des Werkstücks W im Bereich seiner Enden E1 und E2 dadurch, dass zunächst beide Kreuzschlitten 40, 50 synchron in Z-Richtung beispielsweise auf das Abläng- und Zentrierwerkzeug 102 zufahren, so dass im Bereich des Endes E1 des Werkstücks W zunächst eine Zentrierbohrung eingebracht wird und außerdem ein stirnseitiges Bearbeiten des Werkstücks W am Ende E1 erfolgt, wobei das Werkstück W drehfest mit den Werkstückhalteeinrichtungen 80, 90 gehalten wird, während die Zerspanung durch das um seine Rotationsachse 106 rotierende Werkzeug 102 erfolgt.

Nach Bearbeiten des Endes E1 fahren die beiden Kreuzschlitten 40, 50 synchron in Z-Richtung auf das Abläng- und Zentrierwerkzeug 104 zu, so dass auch im Bereich des Endes E2 das Einbringen der Zentrierbohrung und das stirnseitiges Bearbeiten auf ein bestimmtes Maß und somit insgesamt in Verbindung mit der Bearbeitung des Endes E1 ein Ablängen erfolgt.

Damit endet die Bearbeitung des Werkstücks W in der Bearbeitungsstation 100, wobei nach Beendigung der Bearbeitung des Werkstücks W in der Bearbeitungsstation 100 das Werkstück W die gewünschte Länge zwischen den Enden E1 und E2 aufweist und außerdem im Bereich der Enden E1 und E2 Zentrierbohrungen aufweist, so dass damit das Werkstück W koaxial zur Spindelachse 18 zentriert zwischen dem Stirnmitnehmer 17, der Arbeitsspindel 16 und der Reitstockspitze 26 aufgenommen werden kann.

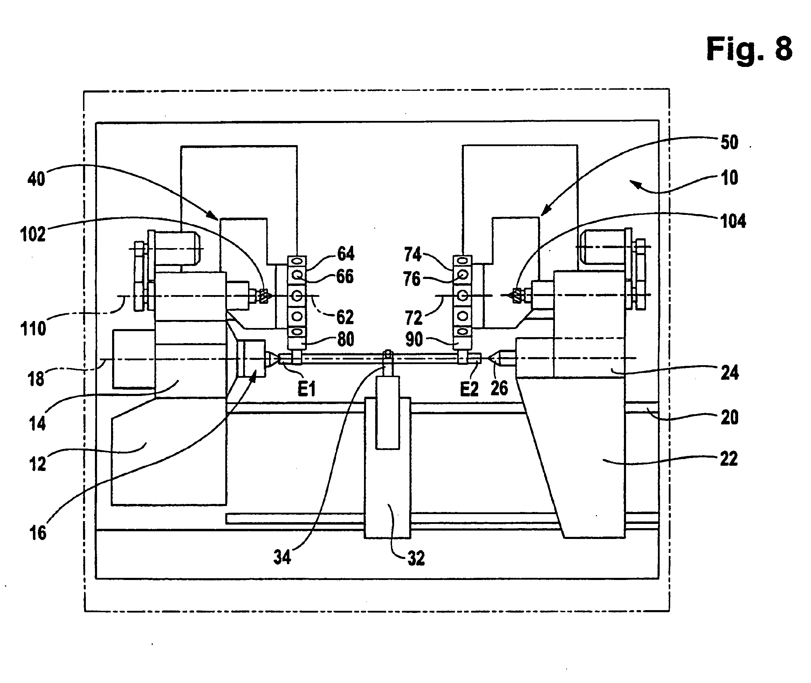

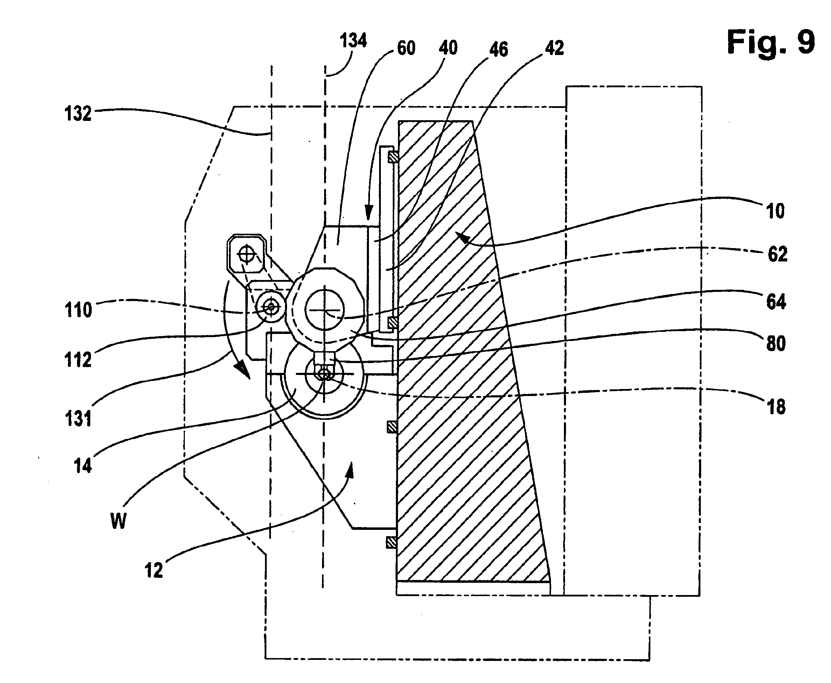

Hierzu erfolgt ein synchrones Verschwenken in der Schwenkrichtung 131 der Revolverköpfe 64, 74, derart, dass die Werkstückhalteeinrichtungen 80, 90 auf einer der Spindelachse 18 zugewandten Seite der Revolverachsen 62 bzw. 72 zu liegen kommen, und somit das Werkstück W auf einer der Spindelachse 18 zugewandten Seite der Revolverköpfe 64, 74 steht. Außerdem wird gleichzeitig durch synchrones Verschwenken der Revolverköpfe 64, 74 das Werkstück W mit seiner Längsachse LW so positioniert, dass dieses in der Drehebene 134 liegt, wie in Fig. 8 und 9 dargestellt.

Zusätzlich erfolgt noch durch synchrones Bewegen der Kreuzschlitten 40, 50 ein koaxiales Ausrichten der Längsachse LW des Werkstücks W zur Spindelachse 18 und ein Verschieben des Werkstücks W in der Z-Richtung in Richtung auf den Stirnmitnehmer 17 der Arbeitsspindel 16, so dass diese in die Zentrierbohrung im ersten Ende E1 des Werkstücks W eingreifen kann. Außerdem erfolgt in dieser Ausrichtung des Werkstücks W ein Zustellen der Reitstockspitze 26 in Z-Richtung auf die Arbeitsspindel 16 zu, so dass diese ebenfalls in die Zentrierbohrung im Ende E2 des Werkstücks W in Eingriff kommen kann und somit das Werkstück W zwischen der Reitstockspitze 26 und dem Stirnmitnehmer 17 der Arbeitsspindel 16 kraftschlüssig eingespannt ist, um das Werkstück W durch Antreiben der Arbeitsspindel 16 um die Spindelachse 18 zur Drehbearbeitung rotierend antreiben zu können.

Die Bearbeitung des Werkstücks W in der Drehbearbeitungsstation 30 erfolgt vorzugsweise durch Werkzeuge 142 bzw. 144, welche in Werkzeugaufnahmen 66 bzw. 76 der Revolverköpfe 64, 74, in denen Werkzeughalteeinrichtungen 80, 90 sitzen, angeordnet sind und durch geeignetes Verdrehen der Revolverköpfe 64, 74 in eine Arbeitsposition relativ zur Spindelachse 18 bringbar sind.

Dabei können die Werkzeuge 142, 144 entweder synchron miteinander bewegt werden oder auch völlig unabhängig voneinander durch die Maschinensteuerung 128 bewegt werden, so dass das Werkstück W in beliebiger Weise bearbeitet werden kann.

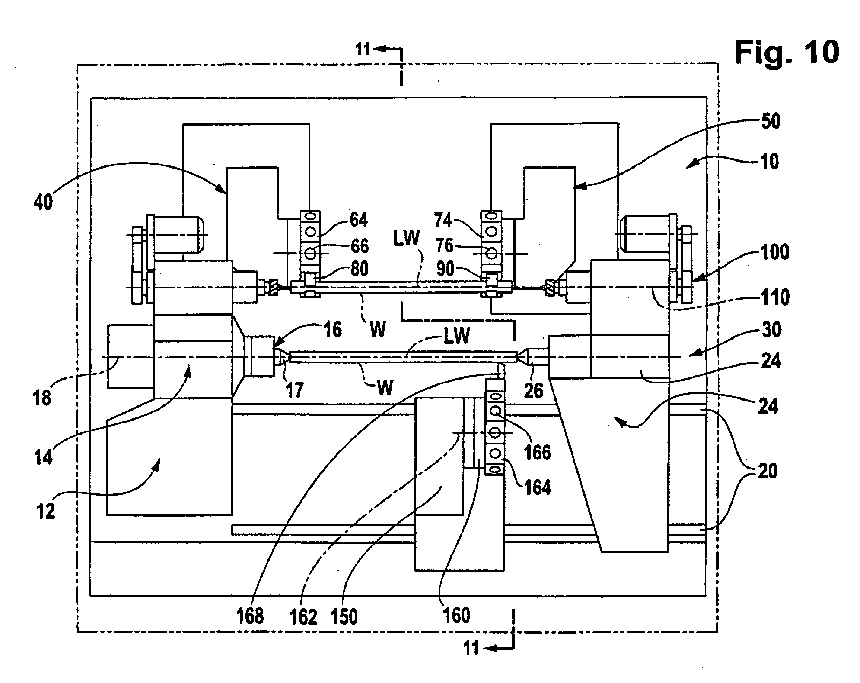

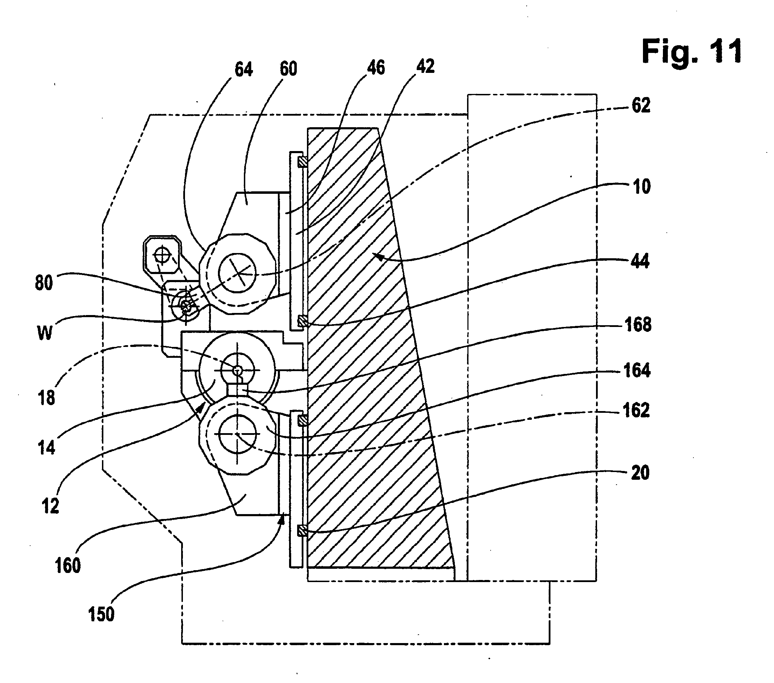

Bei einem zweiten Ausführungsbeispiel, dargestellt in Fig. 10 und 11, sind diejenigen Teile, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel verwiesen wird.

Im Gegensatz zum ersten Ausführungsbeispiel ist bei dem zweiten Ausführungsbeispiel anstelle des Lünettenschlittens 32 ein Kreuzschlitten 150 auf den Führungen 20 in Z-Richtung verschiebbar gelagert, wobei der Kreuzschlitten 150 ein Revolvergehäuse 160 trägt, auf welchem um eine Revolverachse 162 drehbar ein Revolverkopf 164 angeordnet ist, in dessen Werkzeugaufnahmen 166 Werkzeuge 168 eingesetzt sind, so dass mittels dieser Werkzeuge 168 das Werkstück W in der Drehbearbeitungsstation 30 ebenfalls noch bearbeitet werden kann, beispielsweise in Ergänzung zu den in den Revolverköpfen 64 und 74 angeordneten Werkzeugen 142 und 144.

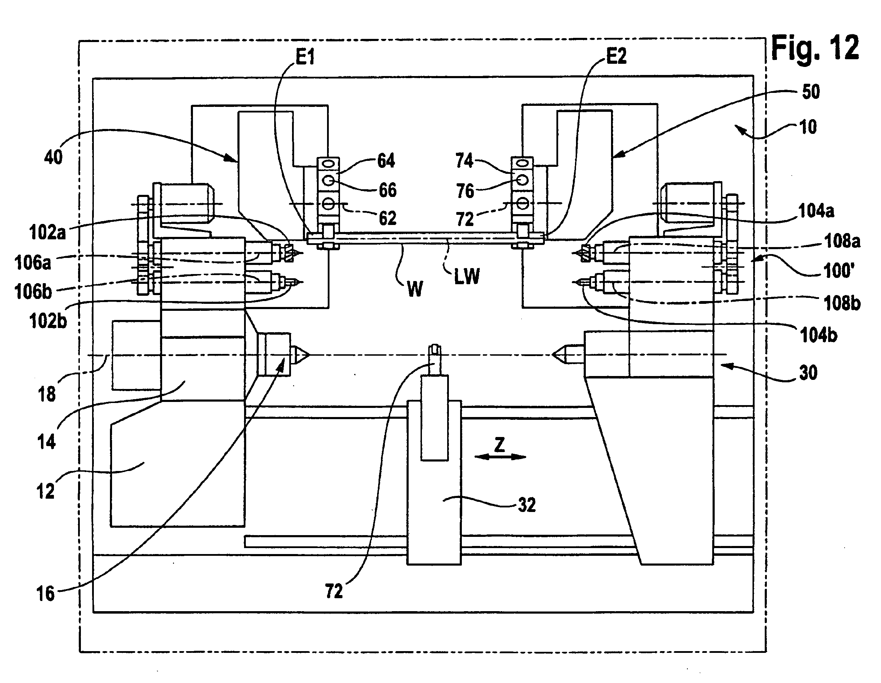

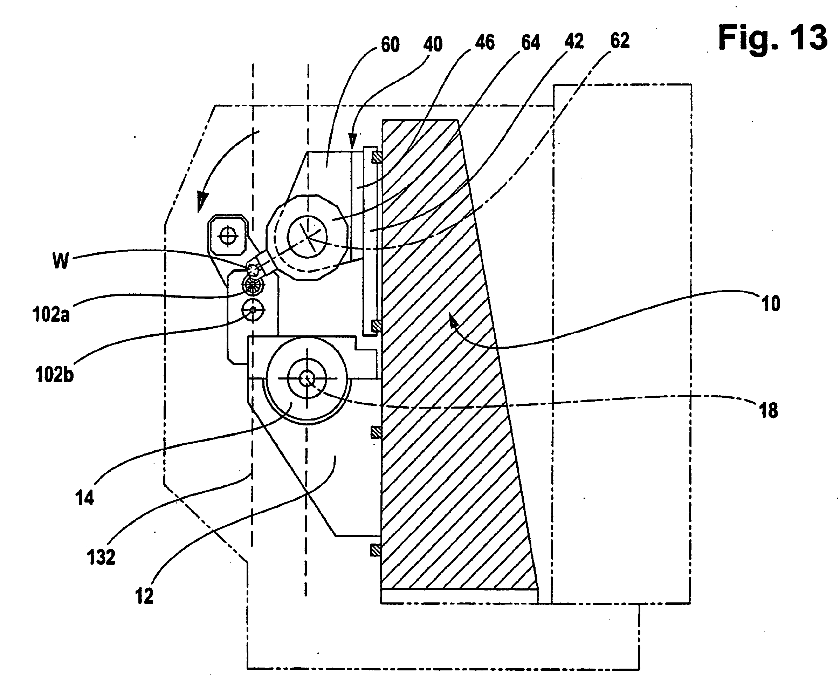

Bei einem dritten Ausführungsbeispiel, dargestellt in Fig. 12 und Fig. 13, sind ebenfalls diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten oder zweiten Ausführungsbeispiel verwiesen werden kann.

Im Gegensatz zum ersten und zweiten Ausführungsbeispiel sind in der Bearbeitungsstation 100' nicht nur einander gegenüberliegende rotierende Werkzeuge 102 und 104 angeordnet, sondern jeweils zwei rotierende Werkzeuge 102a und 102b sowie 104a und 104b, wobei die rotierenden Werkzeuge 102a und 104a Werkzeuge zum Ablängen der Enden E1 und E2 des Werkstücks W sind, während die rotierenden Werkzeuge 102b und 104b Werkzeuge zum Einbringen der Zentrierbohrungen in die Enden E1 und E2 des Werkstücks W sind.

Bei einer derartigen Ausbildung der Bearbeitungsstation 100' ist somit das Ablängen der Werkstücke vom Einbringen der Zentrierbohrungen getrennt, so dass beispielsweise, wie in Fig. 13 dargestellt, durch synchrone Bewegung der Werkstückhalteeinrichtungen 80, 90 das Werkstück W zunächst mit dem Ende E1 quer zur Rotationsachse 106a, beispielsweise durch Verschieben in der Bearbeitungsebene 132 mittels der synchronen Bewegung der Kreuzschlitten 40 und 50, an dem Ablängwerkzeug 102a vorbeibewegt wird und dann koaxial zum rotierenden Werkzeug 102b ausgerichtet und in Z-Richtung derart bewegt wird, dass dieses rotierende Werkzeug 102b die Zentrierbohrungen in das Ende E1 des Werkstücks W einbringt.

In gleicher Weise wird nach synchronem Verfahren der Werkstückhalteeinrichtungen 80, 90 ebenfalls das Werkstück W am Ende E2 mit dem rotierenden Werkzeug 104a abgelängt und anschließend mit dem rotierenden Werkzeug 104b die Zentrierbohrung in das Ende E2 eingebracht.

Im Übrigen entspricht das dritte Ausführungsbeispiel dem ersten Ausführungsbeispiel, so dass hinsichtlich der Erläuterung des Aufbaus und der Funktion vollinhaltlich auf die Ausführungen zum ersten Ausführungsbeispiel Bezug genommen wird.

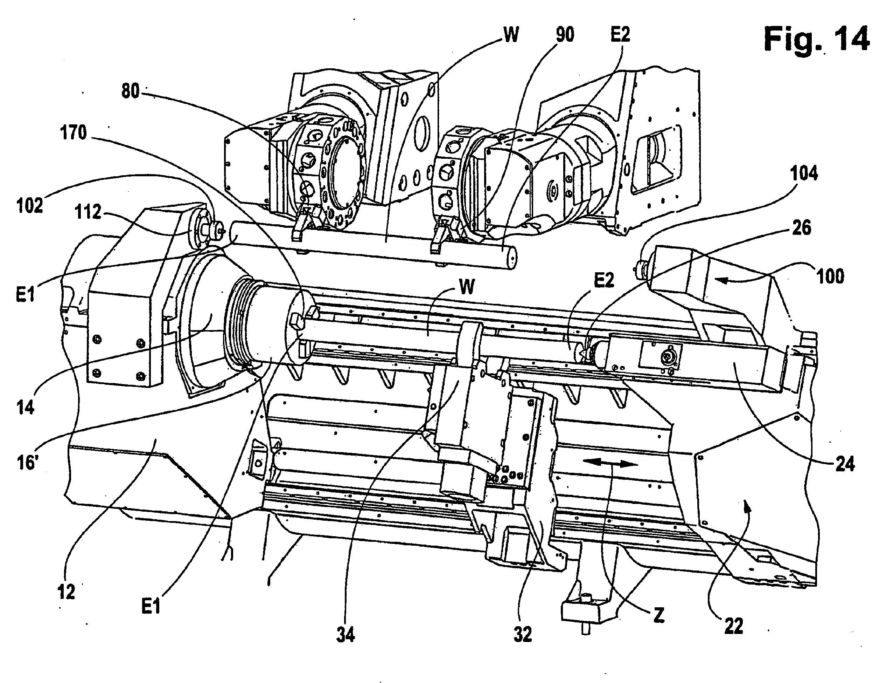

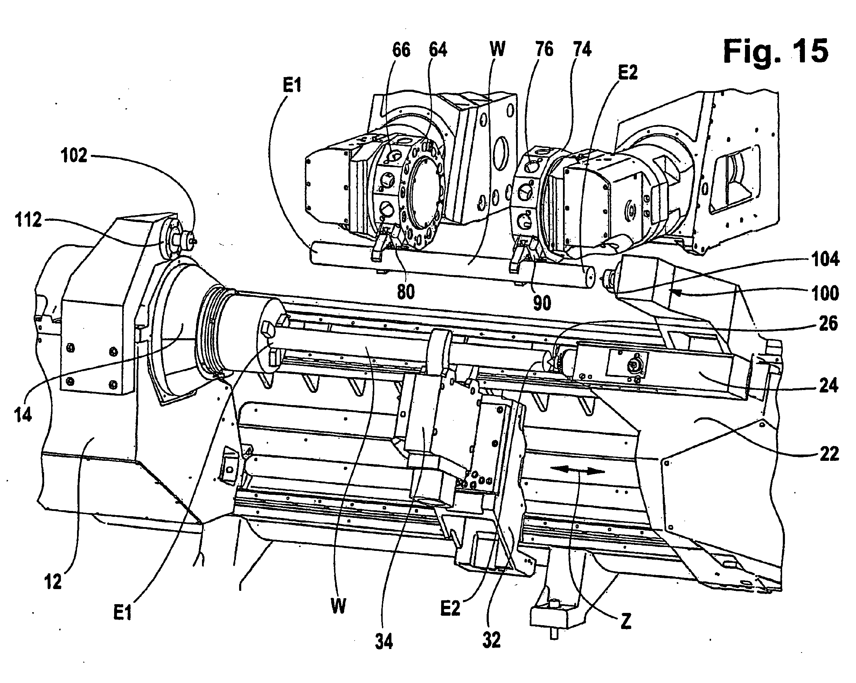

Bei einem vierten Ausführungsbeispiel, dargestellt in Fig. 14 und Fig. 15 sind diejenigen Elemente, die mit denen des ersten Ausführungsbeispiels identisch sind, mit denselben Bezugszeichen versehen, so dass hinsichtlich der Beschreibung derselben vollinhaltlich auf die Ausführungen zum ersten Ausführungsbeispiel verwiesen werden kann.

Im Gegensatz zum ersten Ausführüngsbeispiel ist die Arbeitsspindel 16' nicht mit dem Stirnmitnehmer 17 versehen, sondern mit einem Spannfutter 170, mit welchem das jeweilige in der Drehbearbeitungsstation 30 zur Bearbeitung angeordnete Werkstück W mit seinem Ende E1 am Umfang eingespannt werden kann.

Ferner ist die Lünette 34 auch gleichzeitig als Greifeinrichtung eingesetzt, um das Werkstück W aus der Drehbearbeitungsstation 30 entnehmen und in einer zeichnerisch nicht dargestellten Werkstücktransporteinrichtung ablegen können.

Ferner ist in Fig. 14 dargestellt, wie ein Werkstück W in der Bearbeitungsstation 100 einmal in Richtung des rotierenden Werkzeugs 102 bewegt wird, um das Werkstück am Ende E1 abzulängen, während in Fig. 15 dargestellt wird, wie das Werkstück W in Richtung des Werkzeugs 104 bewegt wird, um dieses am Ende E2 abzulängen und mit einer Zentrierbohrung für die Reitstockspitze 26 zu versehen.

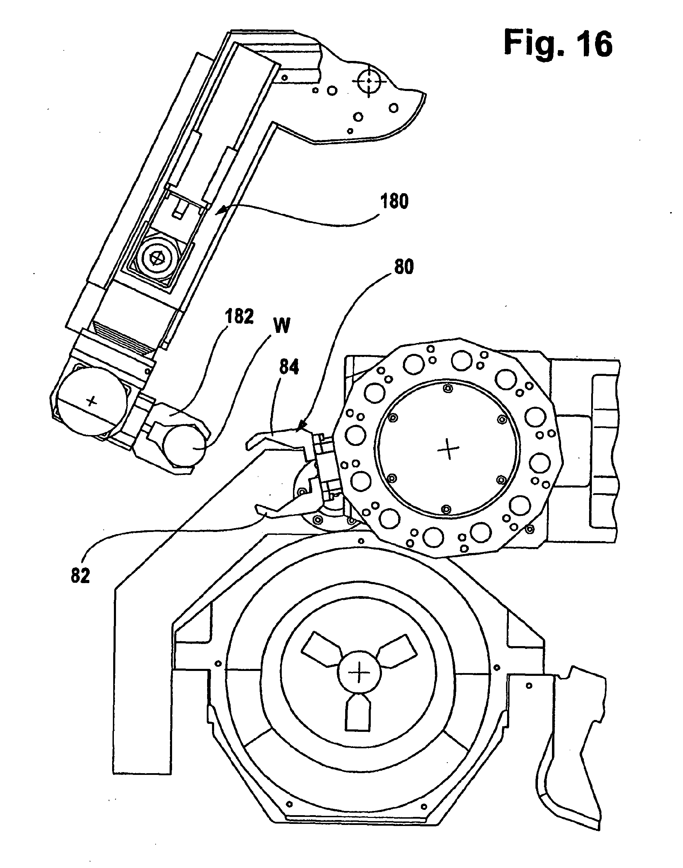

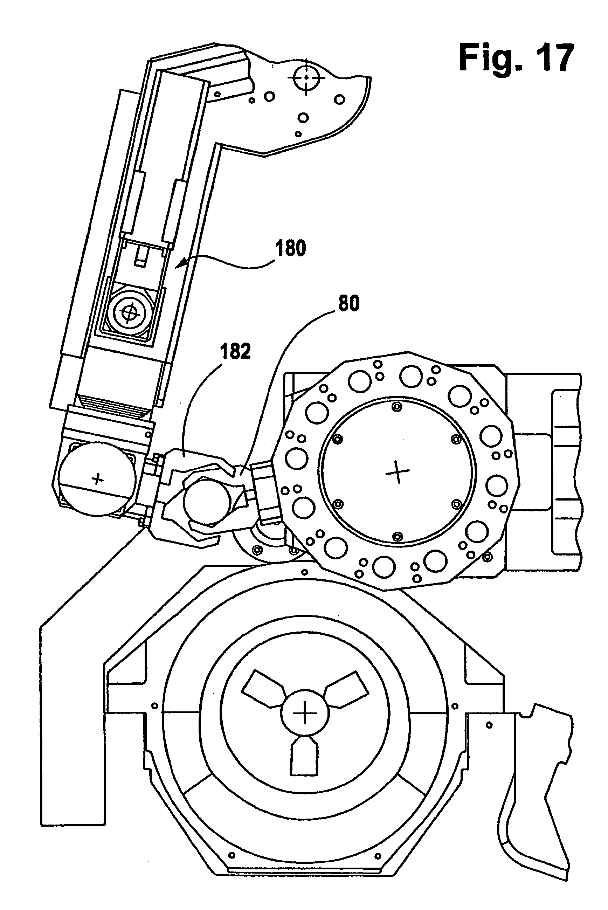

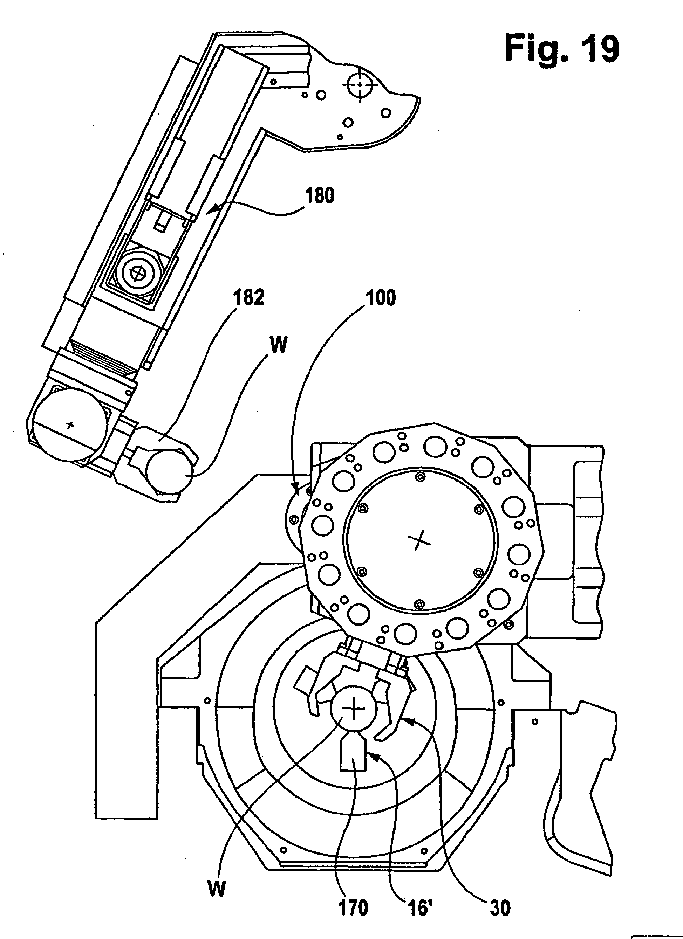

Ein fünftes Ausführungsbeispiel, dargestellt in den Fig. 16 bis 19 weist zusätzlich zu den Werkstückhalteeinrichtungen 80, 90 einen Teleskopgreifer 180 auf, welcher dazu dient, ein Werkstück W mit einer Greiferzange 182 zu greifen und in die Werkstückhalteeinrichtungen 80, 90, insbesondere deren Haltefinger 82, 84 bzw. 92, 94 einzulegen, so dass, wie in Fig. 17, dargestellt, eine Übergabe von der Greiferzange 182 an die Werkstückhalteeinrichtungen 80, 90 erfolgt.

Das nunmehr von den Werkstückhalteeinrichtungen 80, 90 gehaltene Werkstück W kann dann in der Bearbeitungsstation 100 durch Positionieren mittels der Bewegung der Revolverköpfe 64, 74 und der Kreuzschlitten 40, 50 an den jeweiligen Enden bearbeitet werden.

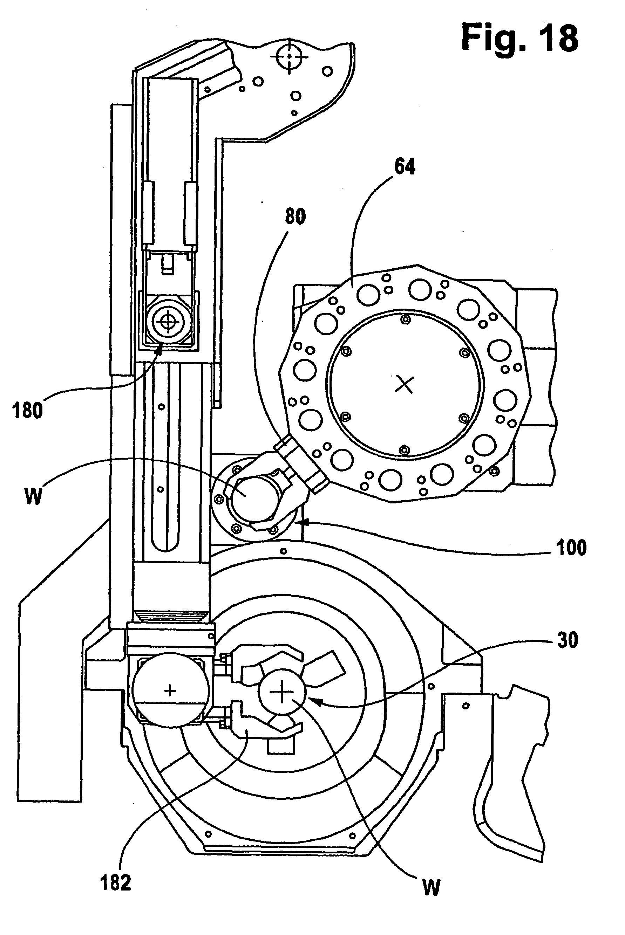

Gleichzeitig lässt sich der Teleskopgreifer 180 in seiner Länge derart ausfahren, dass die Greiferzange 182 in der Lage ist, ein in der Drehbearbeitungsstation fertig bearbeitetes Werkstück zu greifen und aus der Drehbearbeitungsstation 30 zu entnehmen, wie in Fig. 18 dargestellt.

Nach Entnehmen des Werkstücks W aus der Drehbearbeitungsstation mittels des Teleskopgreifers 180 besteht die Möglichkeit, ein weiteres, in der Bearbeitungsstation 100 vorher endseitig bearbeitetes Werkstück W in die Drehbearbeitungsstation 30 einzusetzen und dabei mittels der Arbeitsspindel 16' und deren Spannfutter 170 aufzunehmen, um das Werkstück W in gleicher Weise wie bereits im Zusammenhang mit dem vierten Ausführungsbeispiel beschrieben, in der Drehbearbeitungsstation 30 bearbeiten zu können.

Auch bei dem fünften Ausführungsbeispiel sind diejenigen Teile, die mit denen der voranstehenden Ausführungsbeispiele identisch sind, mit denselben Bezugszeichen versehen, so dass hinsichtlich des Aufbaus derselben und der Funktion derselben vollinhaltlich auf die Ausführungen zu den voranstehenden Ausführungsbeispielen Bezug genommen werden kann.

## Patentansprüche

1. Drehmaschine umfassend ein Maschinengestell (10),
eine Drehbearbeitungsstation (30) mit einer am Maschinengestell (10) angeordneten und um eine spindelachse (18) drehbaren Arbeitsspindel (16),
mindestens einen in X-Richtung auf einer Seite der Spindelachse (18) angeordneten Trägerschlitten (40, 50), welcher relativ zum Maschinengestell (10) sowohl In einer parallel zur Spindelachse (18) verlaufenden Z-Richtung (Z) als auch in einer quer zur Spindelachse (18) verlaufenden X-Richtung (X) bewegbar ist, eine auf dem mindestens einen Trägerschlitten (40, 50) angeordnete Werkstückhalteeinrichtung (80, 90), in welcher ein Werkstück (W) drehfest aufnehmbar ist,
eine Maschinensteuerung (128) zur Steuerung der Arbeitsspindel (16) und der Bewegung des mindestens einen Trägerschlittens (40, 50), und eine auf einer dem mindestens einen Trägerschlitten (40, 50) zugewandten Seite der Spindelachse (18) angeordnete Bearbeitungsstation (100), in welcher mindestens ein um seine Rotationsachse (106, 108) rotierendes Werkzeug (102, 104) zur Werkstückbearbeitung vorgesehen ist,
**dadurch gekennzeichnet, dass** auf derselben Seite der Spindelachse (18) zwei Trägerschlitten (40, 50) angeordnet sind, welche beide jeweils mit einer Werkstückhalteeinrichtung (80, 90) zum gleichzeitigen Halten derselben Werkstücks (W) versehen sind.

2. Drehmaschine nach Anspruch 1, **dadurch gekennzeichnet, dass** mit beiden Werkstückhalteeinrichtungen (80, 90) das Werkstück (W) gleichzeitig greifbar und durch synchrone Bewegungen der Werkstückhalteeinrichtungen (80, 90) das Werkstück (W) in der Bearbeitungsstation (100) positionierbar ist.

3. Drehmaschine nach Anspruch 1 oder 2, **dadurch gekennzeichnet, dass** das Werkstück (W) durch synchrone Bewegungen der Werkstückhalteeinrichtungen (80, 90) in die Drehbearbeitungsstation (30) einsetzbar ist.

4. Drehmaschine nach einem der Ansprüche 1 bis 3, **dadurch gekennzeichnet, dass** auf jedem Trägerschlitten (40, 50) ein Trägerkopf (64, 74) angeordnet ist, welcher die jeweilige Werkstückhalteeinrichtung (80, 90) trägt.

5. Drehmaschine nach Anspruch 4, **dadurch gekennzeichnet, dass** die Trägerköpfe (64, 76) zum positionieren des Werkstücks (W) synchron relativ zum jeweiligen Trägerschlitten (40, 50) bewegbar sind.

6. Drehmaschine nach einem der Ansprüche 1 bis 5, **dadurch gekennzeichnet, dass** die Trägerschlitten (40, 50) zum Positionieren und/oder Bearbeiten des Werkstücks (W) synchron relativ zum Maschinengestell (10) bewegbar sind.

7. Drehmaschine nach einem der voranstehenden Ansprüche, **dadurch gekennzeichnet, dass** die Trägerschlitten (40, 50) einen relativ zu diesem bewegbaren Trägerkopf (64, 74) aufweisen, an welchem die Werkstückhalteeinrichtung (80, 90) angeordnet ist und mit welchem die Werkstückhalteeinrichtung (80, 90) in einer weiteren, quer zur Z-Achse verlaufenden Querrichtung (131) relativ zum Trägerschlitten (40, 50) bewegbar ist, dass ein in der Werkstückhalteeinrichtung (80, 90) aufgenommenes Werkstück (W) durch Bewegen in der weiteren Querrichtung (131) relativ zum Trägerschlitten (40, 50) mindestens in der Bearbeitungsstation (100) positionierbar und in die Drehbearbeitungsstation (30) einsetzbar und/oder aus dieser entnehmbar ist.

8. Drehmaschine nach Anspruch 7, **dadurch gekennzeichnet, dass** die Werkstückhalteeinrichtung (80, 90) durch Bewegen in der weiteren Querrichtung (131) aus einer parallel zur X-Richtung (X) und durch die Spindelachse (18) hindurch verlaufenden Drehbearbeitungsebene (134) herausbewegbar ist.

9. Drehmaschine nach Anspruch 7 oder 8, **dadurch gekennzeichnet, dass** der Trägerkopf (64, 74) als um eine zur Spindelachse (18) parallele Schwenkachse (62, 72) schwenkbar ist.

10. Drehmaschine nach einem der Ansprüche 7 bis 9, **dadurch gekennzeichnet, dass** an dem Trägerkopf (64, 74) neben der Werkstückhalteeinrichtung (80, 90) noch mindestens ein Bearbeitungswerkzeug (142, 144) zur Bearbeitung des in der Drehbearbeitungsstation (30) aufgenommenen Werkstücks (W) vorgesehen ist.

11. Drehmaschine nach Anspruch 10, **dadurch gekennzeichnet, dass** der Trägerkopf (64, 74) als Revolverkopf ausgebildet ist.

12. Drehmaschine nach einem der Ansprüche 8 bis 11, **dadurch gekennzeichnet, dass** das Werkstück (W) zum Bearbeiten in der Bearbeitungsstation (100) in einer Bearbeitungsebene (132) bewegbar ist, die parallel zu der Drehbearbeitungsebene (134) verläuft.

13. Drehmaschine nach einem der Ansprüche 9 bis 12, **dadurch gekennzeichnet, dass** das Werkstück (W) derart um die Schwenkachse (62, 72) schwenkbar ist, dass dieses von einer der Spindelachse (18) zugewandten Seite der Schwenkachse (62, 72) auf eine der Spindelachse (18) abgewandte Seite der Schwenkachse (62, 72) verschwenkbar ist.

14. Drehmaschine nach einem der voranstehenden Ansprüche, **dadurch gekennzeichnet, dass** das Werkstück (W) mindestens durch Bewegen des Trägerschlittens (40, 50) relativ zu dem mindestens einen rotierenden Werkzeug (102, 104) in der Bearbeitungsstation (100) auf mindestens einer Seite (E1, E2) bearbeitbar ist.

15. Drehmaschine nach einem der voranstehenden Ansprüche, **dadurch gekennzeichnet, dass** das mindestens eine rotierende Werkzeuge (102, 104) eine zur Spindelachse (18) parallele Rotationsachse (106, 108) aufweist.

16. Drehmaschine nach einem der voranstehenden Ansprüche, **dadurch gekennzeichnet, dass** die Bearbeitungsstation (100) mindestens eine in Richtung quer zur Spindelachse (18) stationär relativ zum Maschinengestell (10) angeordnete erste Werkzeugaufnahme (112, 114) aufweist.

17. Drehmaschine nach einem der voranstehenden Ansprüche, **dadurch gekennzeichnet, dass** die Bearbeitungsstation (100) mindestens eine in Richtung parallel zur Spindelachse (18) stationär relativ zum Maschinengestell (10) angeordnete erste Werkzeugaufnahme (112, 114) aufweist.

18. Drehmaschine nach einem der voranstehenden Ansprüche, **dadurch gekennzeichnet, dass** in der Bearbeitungsstation (100) mehrere rotierende Werkzeuge (102, 104) vorgesehen sind.

19. Drehmaschine nach Anspruch 18, **dadurch gekennzeichnet, dass** die Rotationsachsen der mehreren rotierenden Werkzeuge parallel zueinander ausgerichtet sind.

20. Drehmaschine nach einem der voranstehenden Ansprüche, **dadurch gekennzeichnet, dass** in der Bearbeitungsstation (100) einander gegenüberliegende rotierende Werkzeuge vorgesehen sind, mit denen in einer Richtung parallel zur Spindelachse (18) einander gegenüberliegende erste und zweite Seiten (E1, E2) des Werkstücks (W) bearbeitbar sind.

21. Drehmaschine nach Anspruch 20, **dadurch gekennzeichnet, dass** die Bearbeitungsstation (100) in einer Richtung parallel zur Spindelachse (18) einander gegenüberliegende erste und zweite Werkzeugaufnahmen (112, 114) aufweist.

22. Drehmaschine nach Anspruch 21, **dadurch gekennzeichnet, dass** die ersten und zweiten Werkzeugaufnahmen (112, 114) eigene Werkzeugantriebe (116, 118) aufweisen.

23. Drehmaschine nach Anspruch 21 oder 22, **dadurch gekennzeichnet, dass** die ersten und zweiten Werkzeugaufnahmen (112, 114) in Richtung quer zur Spindelachse (18) stationär relativ zum Maschinengestell (10) angeordnet sind.

24. Drehmaschine nach einem der Ansprüche 21 bis 23, **dadurch gekennzeichnet, dass** die ersten und zweiten Werkzeugaufnahmen (112, 114) in Richtung parallel zur Spindelachse (18) stationär relativ zum Maschinengestell (10) angeordnet sind.

25. Drehmaschine nach einem der voranstehenden Ansprüche, **dadurch gekennzeichnet, dass** in der Bearbeitungsstation (100) die einander gegenüberliegenden Seiten (E1, E2) des Werkstücks (W) aufeinanderfolgend bearbeitbar sind.

26. Drehmaschine nach einem der voranstehenden Ansprüche, **dadurch gekennzeichnet, dass** die Bearbeitungsstation (100) eine Vorbearbeitungsstation für ein rohes Werkstück (W) ist.

27. Drehmaschine nach Anspruch 26, **dadurch gekennzeichnet, dass** das in der Vorbearbeitungsstation (100) vorbearbeitete rohe Werkstück (W) in die Drehbearbeitungsstation (30) einsetzbar ist.

28. Drehmaschine nach einem der voranstehenden Ansprüche, **dadurch gekennzeichnet, dass** in der Drehbearbeitungsstation (30) das Werkstück (W) einerseits mittels der Arbeitsspindel (16) und andererseits mittels eines Reitstocks (26) aufnehmbar ist.

## Claims

1. Lathe comprising a machine frame (10),
a turning station (30) with a working spindle (16) arranged on the machine frame (10) and rotatable about a spindle axis (18),
at least one carrier slide (40, 50) arranged in X direction on one side of the spindle axis (18), said slide being movable relative to the machine frame (10) both in a Z direction extending parallel to the spindle axis (18) and in an X direction extending transversely to the spindle axis (18), a workpiece holding device (80, 90) arranged on the at least one carrier slide (40, 50), a workpiece (W) being non-rotatably accommodatable in said holding device,
a machine control (128) for controlling the working spindle (16) and the movement of the at least one carrier slide (40, 50), and a machining station (100) arranged on a side of the spindle axis (18) facing the at least one carrier slide (40, 50), at least one tool (102, 104) rotating about its axis of rotation (106, 108) being provided in said machining station for the purpose of machining the workpiece, **characterized in that** two carrier slides (40, 50) are arranged on the same side of the spindle axis (18) and each of them is provided with a workpiece holding device (80, 90) for holding the same workpiece (W) at the same time.

2. Lathe as defined in claim 1, **characterized in that** the workpiece (W) is grippable with both workpiece holding devices (80, 90) at the same time and the workpiece (W) is positionable in the machining station (100) as a result of synchronous movements of the workpiece holding devices (80, 90).

3. Lathe as defined in claim 1 or 2, **characterized in that** the workpiece (W) is insertable into the turning station (30) as a result of synchronous movements of the workpiece holding devices (80, 90).

4. Lathe as defined in any one of claims 1 to 3, **characterized in that** a carrier head (64, 74) is arranged on each carrier slide (40, 50) and bears the respective workpiece holding device (80, 90).

5. Lathe as defined in claim 4, **characterized in that** the carrier heads (64, 74) are movable synchronously relative to the respective carrier slide (40, 50) for the purpose of positioning the workpiece (W).

6. Lathe as defined in any one of claims 1 to 5, **characterized in that** the carrier slides (40, 50) are movable synchronously relative to the machine frame (10) for the purpose of positioning and/or machining the workpiece (W).

7. Lathe as defined in any one of the preceding claims, **characterized in that** the carrier slides (40, 50) have a carrier head (64, 74) movable relative thereto, the workpiece holding device (80, 90) being arranged on said head and the workpiece holding device (80, 90) being moveable with said head in an additional transverse direction (131) relative to the carrier slide (40, 50), said direction extending transversely to the Z axis, that a workpiece (W) accommodated in the workpiece holding device (80, 90) is positionable at least in the machining station (100) as a result of movement in the additional transverse direction (131) relative to the carrier slide (40, 50) and is insertable into the turning station (30) and/or removable from it.

8. Lathe as defined in claim 7, **characterized in that** the workpiece holding device (80, 90) is movable out of a turning plane (134) extending parallel to the X direction (X) and through the spindle axis (18) as a result of movement in the additional transverse direction (131).

9. Lathe as defined in claim 7 or 8, **characterized in that** the carrier head (64, 74) is pivotable about a pivot axis (62, 72) parallel to the spindle axis (18).

10. Lathe as defined in any one of claims 7 to 9, **characterized in that** at least one machining tool (142, 144) is provided on the carrier head (64, 74) in addition to the workpiece holding device (80, 90) for the purpose of machining the workpiece (W) accommodated in the turning station (30).

11. Lathe as defined in claim 10, **characterized in that** the carrier head (64, 74) is designed as a turret head.

12. Lathe as defined in any one of claims 8 to 11, **characterized in that** the workpiece (W) is movable in a machining plane (132) for the purpose of machining in the machining station (100), said machining plane extending parallel to the turning plane (134).

13. Lathe as defined in any one of claims 9 to 12, **characterized in that** the workpiece (W) is pivotable about the pivot axis (62, 72) in such a manner that it is pivotable from a side of the pivot axis (62, 72) facing the spindle axis (18) to a side of the pivot axis (62, 72) facing away from the spindle axis (18).

14. Lathe as defined in any one of the preceding claims, **characterized in that** the workpiece (W) is machinable on at least one side (E1, E2) at least as a result of movement of the carrier slide (40, 50) relative to the at least one rotating tool (102, 104) in the machining station (100).

15. Lathe as defined in any one of the preceding claim, **characterized in that** the at least one rotating tool (102, 104) has an axis of rotation (106, 108) parallel to the spindle axis (18).

16. Lathe as defined in any one of the preceding claims, **characterized in that** the machining station (100) has at least one first tool receptacle (112, 114) arranged stationary relative to the machine frame (10) in a direction transverse to the spindle axis (18).

17. Lathe as defined in any one of the preceding claims, **characterized in that** the machining station (100) has at least one first tool receptacle (112, 114) arranged stationarily relative to the machine frame (10) in a direction parallel to the spindle axis (18).

18. Lathe as defined in any one of the preceding claims, **characterized in that** several rotating tools (102, 104) are provided in the machining station (100).

19. Lathe as defined in claim 18, **characterized in that** the axes of rotation of the several rotating tools are aligned parallel to one another.

20. Lathe as defined in any one of the preceding claims, **characterized in that** rotating tools located opposite one another are provided in the machining station (100), oppositely located first and second sides (E1, E2) of the workpiece (W) being machinable with said tools in a direction parallel to the spindle axis (18).

21. Lathe as defined in claim 20, **characterized in that** the machining station (100) has first and second tool receptacles (112, 114) located opposite one another in a direction parallel to the spindle axis (18).

22. Lathe as defined in claim 21, **characterized in that** the first and second tool receptacles (112, 114) have their own tool drives (116, 118).

23. Lathe as defined in claim 21 or 22, **characterized in that** the first and second tool receptacle (112, 114) are arranged stationary relative to the machine frame (10) in a direction transverse to the spindle axis (18).

24. Lathe as defined in any one of claims 21 to 23, **characterized in that** the first and second tool receptacles (112, 114) are arranged stationarily relative to the machine frame (10) in a direction parallel to the spindle axis (18).

25. Lathe as defined in any one of the preceding claims, **characterized in that** in the machining station (100) the oppositely located sides (E1, E2) of the workpiece (W) are machinable one after the other.

26. Lathe as defined in any one of the preceding claims, **characterized in that** the machining station (100) is a pre-machining station for an untreated workpiece (W).

27. Lathe as defined in claim 26, **characterized in that** the untreated workpiece (W) pre-machined in the pre-machining station (100) is insertable into the turning station (30).

28. Lathe as defined in any one of the preceding claims, **characterized in that** in the turning station (30) the workpiece (W) is accommodatable on the one hand by means of the working spindle (16) and on the other hand by means of a tailstock (26).

## Revendications

1. Tour comprenant un châssis de machine (10),
un poste de tournage (30) doté d'une broche de travail (16) disposée au niveau du châssis de machine (10) et pouvant tourner autour d'un axe de broche (18),
au moins un chariot de support (40, 50) disposé dans la direction X sur un côté de l'axe de broche (18), lequel peut être déplacé par rapport au châssis de machine (10) aussi bien dans une direction Z s'étendant de manière parallèle par rapport à l'axe de broche (18) que dans une direction X (X) s'étendant de manière transversale par rapport à l'axe de broche (18), un système de maintien de pièce (80, 90) disposé sur l'au moins un chariot de support (40, 50), dans lequel une pièce (W) peut être logée de manière solidaire en rotation,
une commande de machine (128) servant à commander la broche de travail (16) et le mouvement de l'au moins un chariot de support (40, 50) et un poste d'usinage (100) disposé sur un côté, tourné vers l'au moins un chariot de support (40, 50), de l'axe de broche (18), dans lequel au moins un outil (102, 104) tournant autour de son axe de rotation (106, 108) est prévu aux fins de l'usinage de la pièce,
**caractérisé en ce que** sont disposés, sur le même côté de l'axe de broche (18), deux chariots de support (40, 50), qui sont pourvus respectivement d'un système de maintien de pièce (80, 90) servant à maintenir simultanément la même pièce (W).

2. Tour selon la revendication 1, **caractérisé en ce que** la pièce (W) peut être saisie simultanément à l'aide des deux systèmes de maintien de pièce (80, 90), et **en ce que** la pièce (W) peut être positionnée dans le poste d'usinage (100) par des mouvements synchrones des systèmes de maintien de pièce (80, 90).

3. Tour selon la revendication 1 ou 2, **caractérisé en ce que** la pièce (W) peut être insérée dans le poste de tournage (30) par des mouvements synchrones des systèmes de maintien de pièce (80, 90).

4. Tour selon l'une quelconque des revendications 1 à 3, **caractérisé en ce qu'**une tête de support (64, 74) est disposée sur chaque chariot de support (40, 50), laquelle supporte le système de maintien de pièce (80, 90) respectif.

5. Tour selon la revendication 4, **caractérisé en ce que** les têtes de support (64, 76) peuvent être déplacées de manière synchrone par rapport au chariot de support (40, 50) respectif aux fins du positionnement de la pièce (W).

6. Tour selon l'une quelconque des revendications 1 à 5, **caractérisé en ce que** les chariots de support (40, 50) peuvent être déplacés de manière synchrone par rapport au châssis de machine (10) aux fins du positionnement et/ou de l'usinage de la pièce (W).

7. Tour selon l'une quelconque des revendications précédentes, **caractérisé en ce que** les chariots de support (40, 50) présentent une tête de support (64, 74) pouvant être déplacée par rapport audit chariot de support, au niveau de laquelle est disposé le système de maintien de pièce (80, 90) et qui permet de déplacer le système de maintien de pièce (80, 90), par rapport au chariot de support (40, 50), dans une autre direction transversale (131) s'étendant de manière transversale par rapport à l'axe Z, **en ce qu'**une pièce (W) logée dans le système de maintien de pièce (80, 90) peut être positionnée au moins dans le poste d'usinage (100) par le déplacement dans l'autre direction transversale (131) par rapport au chariot de support (40, 50) et peut être insérée dans le poste de tournage (30) et/ou en être retirée.

8. Tour selon la revendication 7, **caractérisé en ce que** le système de maintien de pièce (80, 90) peut être sorti par le déplacement dans l'autre direction transversale (131) d'un plan de tournage (134) s'étendant de manière parallèle par rapport à la direction X (X) et à travers l'axe de broche (18).

9. Tour selon la revendication 7 ou 8, **caractérisé en ce que** la tête de support (64, 74) peut pivoter autour d'un axe de pivotement (62, 72) parallèle par rapport à l'axe de broche (18).

10. Tour selon l'une quelconque des revendications 7 à 9, **caractérisé en ce qu'**au moins encore un outil d'usinage (142, 144) servant à usiner la pièce (W) logée dans le poste de tournage (30) est prévu au niveau de la tête de support (64, 74) en addition du système de maintien de pièce (80, 90).

11. Tour selon la revendication 10, **caractérisé en ce que** la tête de support (64, 74) est réalisée sous la forme d'une tête de révolver.

12. Tour selon l'une quelconque des revendications 8 à 11, **caractérisé en ce que** la pièce (W) destinée à être usinée dans le poste d'usinage (100) peut être déplacée dans un plan d'usinage (132), qui s'étend de manière parallèle par rapport au plan de tournage (134).

13. Tour selon l'une quelconque des revendications 9 à 12, **caractérisé en ce que** la pièce (W) peut pivoter autour de l'axe de pivotement (62, 72) de telle manière que ladite pièce peut pivoter depuis un côté, tourné vers l'axe de broche (18), de l'axe de pivotement (62, 72), sur un côté, opposé à l'axe de broche (18), de l'axe de pivotement (62, 72).

14. Tour selon l'une quelconque des revendications précédentes, **caractérisé en ce que** la pièce (W) peut être usinée dans le poste d'usinage (100), sur au moins un côté (E1, E2), au moins par le déplacement du chariot de support (40, 50) par rapport à l'au moins un outil (102, 104) rotatif.

15. Tour selon l'une quelconque des revendications précédentes, **caractérisé en ce que** l'au moins un outil (102, 104) rotatif présente un axe de rotation (106, 108) parallèle à l'axe de broche (18).

16. Tour selon l'une quelconque des revendications précédentes, **caractérisé en ce que** le poste d'usinage (100) présente au moins un premier logement d'outil (112, 114) disposé dans la direction de manière transversale par rapport à l'axe de broche (18), de manière stationnaire par rapport au châssis de machine (10).

17. Tour selon l'une quelconque des revendications précédentes, **caractérisé en ce que** le poste d'usinage (100) présente au moins un premier logement d'outil (112, 114) disposé dans la direction de manière parallèle par rapport à l'axe de broche (18), de manière stationnaire par rapport au châssis de machine (10).

18. Tour selon l'une quelconque des revendications précédentes, **caractérisé en ce que** plusieurs outils (102, 104) rotatifs sont prévus dans le poste d'usinage (100).

19. Tour selon la revendication 18, **caractérisé en ce que** les axes de rotation des nombreux outils rotatifs sont orientés de manière parallèle les uns par rapport aux autres.

20. Tour selon l'une quelconque des revendications précédentes, **caractérisé en ce que** des outils rotatifs se faisant face les uns les autres sont prévus dans le poste d'usinage (100), lesquels permettent d'usiner des premiers et deuxièmes côtés (E1, E2) de la pièce (W) se faisant face les uns les autres dans une direction de manière parallèle par rapport à l'axe de broche (18).

21. Tour selon la revendication 20, **caractérisé en ce que** le poste d'usinage (100) présente des premiers et deuxièmes logements d'outil (112, 114) se faisant face les uns les autres dans une direction de manière parallèle par rapport à l'axe de roche (18).

22. Tour selon la revendication 21, **caractérisé en ce que** les premiers et les deuxièmes logements d'outil (112, 114) présentent des entraînements d'outil (116, 118) propres.

23. Tour selon la revendication 21 ou 22, **caractérisé en ce que** les premiers et deuxièmes logements d'outil (112, 114) sont disposés dans une direction de manière transversale par rapport à l'axe de broche (18), de manière stationnaire par rapport au châssis de machine (10).

24. Tour selon l'une quelconque des revendications 21 à 23, **caractérisé en ce que** les premiers et deuxièmes logements d'outil (112, 114) sont disposés dans une direction de manière parallèle par rapport à l'axe de broche (18), de manière stationnaire par rapport au châssis de machine (10).

25. Tour selon l'une quelconque des revendications précédentes, **caractérisé en ce que** les côtés (E1, E2) de la pièce (W) se faisant face les uns les autres peuvent être usinés les uns après les autres dans le poste d'usinage (100).

26. Tour selon l'une quelconque des revendications précédentes, **caractérisé en ce que** le poste d'usinage (100) est un poste d'usinage préalable pour une pièce (W) brute.

27. Tour selon la revendication 26, **caractérisé en ce que** la pièce (W) brute usinée de manière préalable dans le poste d'usinage préalable (100) peut être insérée dans le poste de tournage (30).

28. Tour selon l'une quelconque des revendications précédentes, **caractérisé en ce que** la pièce (W) peut être logée dans le poste de tournage (30) d'une part au moyen de la broche de travail (16) et d'autre part au moyen d'une poupée mobile (26).
